**Europäisches Patentamt**

**European Patent Office**

**Office européen des brevets**

(19)

(11) Publication number: **0 044 152**
**A2**

(12) **EUROPEAN PATENT APPLICATION**

(21) Application number: **81302894.1**

(22) Date of filing: **26.06.81**

(51) Int. Cl.³: **G 09 G 3/18**
**G 02 F 1/133**

(30) Priority: **14.07.80 US 168920**
**14.07.80 US 168853**
**09.01.81 US 223664**

(43) Date of publication of application:
**20.01.82 Bulletin 82/3**

(84) Designated Contracting States:
**DE FR GB IT**

(71) Applicant: **TEXAS INSTRUMENTS INCORPORATED**
**13500 North Central Expressway**
**Dallas Texas 75265(US)**

(72) Inventor: **Leach, Jerald G.**
**6601 Dunlap 2014**
**Houston Harris Texas 77074(US)**

(72) Inventor: **Test II, Howard R.**
**4438 77th Lubbock**
**Texas, 79424(US)**

(72) Inventor: **Drury, Michael J.**
**2400 Stover Ft. Collins**
**Colorado 80525(US)**

(72) Inventor: **Woodside, Robert H.**
**4431 76th Street Lubbock**
**Texas(US)**

(74) Representative: **Abbott, David John et al,**
**Abel & Imray Northumberland House 303-306 High**
**Holborn**
**London, WC1V 7LH(GB)**

(54) Liquid crystal display system having improved temperature compensation.

(57) A liquid crystal display system having improved temperature compensation based upon electrical measurement of liquid crystal display segment capacitance. The capacitance of a segment is measured when preconditioned to a first voltage below the threshold voltage and when preconditioned to a second voltage above the threshold voltage. Separate embodiments are disclosed which sequentially measure the capacitance of a single segment or which simultaneously measures the capacitance of two segments. The magnitude of the second voltage is adjusted to converge the ratio of the measured capacitances to a predetermined fixed value or a predetermined value selected according to the display temperature. A preferred embodiment is a display system (16) which accepts digit data for storage in a digit shift register (22) or segment data for storage in a segment shift register (24). In accordance with mode signals received by a format control (20), a sequence control (26) cooperates with a ROM (28) to convert digit data to segment data. A temperature compensator (36) cooperates with a voltage regulator (32) to generate the required drive voltages for the display as fixed percentages of the second voltage.

Fig. 2

Croydon Printing Company Ltd.

1

## BACKGROUND OF THE INVENTION

## 1.    Field of the Invention

This invention relates generally to liquid crystal display systems and, more particularly, but not by way of limitation, to a liquid crystal display system having temperature compensation.

## 2.    Prior Art Statement

In general, data processing systems have data processing means which provide output data for display to a user. In systems employing a liquid crystal display, operating voltages are typically selected so as to assure a particular optical contrast ratio at a selected design tmeperature. It has been discovered, however, that the contrast ratio varies as a function of the operating temperature of the display. Thus, the utility of the system will be adversely affected unless temperature compensation is provided. One technique for providing temperature compensation is shown and described in an article entitled "A Novel Method of Temperature Compensation for Multiplexed Liquid Crystal Displays" by C. Hilsum, R. J. Holden, and E. P. Raynes in the 6 July 1978 issue of Electronics Letters (G. B. ), Vol. 14, No. 14, Pp 430-432, published by the Institution of Electrical Engineers, Savoy Place, London WC2R OBL, England.

## SUMMARY OF THE INVENTION

Accordingly, it is an object of the present invention to provide a data processing system which has a temperature compensated liquid crystal display. In one preferred form of the invention, means are provided for alternately coupling one of the segments of the display to first and second voltages, and temperature compensation means are provided for determining the ratio of the capacitances of the segment when coupled to the first and second voltages, respectively. The second voltage is then changed to converge the ratio to a predetermined ratio value which has been selected to assure that the new second voltage will provide a more satisfactory contrast ratio. In one other embodiment, the first and second voltages are coupled to first and second segments, respectively, and the temperature compensation means determine the ratio of the respective capacitances. The second voltage is then changed to converge the ratio to the selected ratio value, so as to provide the desired contrast ratio.

Other objects and advantages of the present invention will be evident from the following detailed description when read in conjunction with the accompanying drawings which illustrate one preferred embodiment thereof.

## BRIEF DESCRIPTION OF THE DRAWINGS

Figure 1 is a block representation of a data processing system constructed in accordance with the preferred embodiment of the present invention.

Figure 2 is a block representation of the display driver of the data processing system of Figure 1.

Figure 3 is a schematic representation of one preferred form of the temperature compensator of the display driver of Figure 2.

Figure 4 is a schematic representation of one other preferred form of the temperature compensator of the display driver of Figure 2.

3

Figure 5 is a schematic representation of one preferred form of the temperature compensator of the liquid crystal display system of Figure 1.

Figure 6 is a graph illustrating the threshold saturation on segment and off segment voltages as a function of temperature according to the teachings of the single ratio embodiment of the present invention.

Figure 7 is a graph illustrating the threshold saturation on segment and off segment voltages as a function of temperature for a two ratio embodiment of the present invention.

Figure 8 is a schematic representation of one other preferred form of the temperature compensator of the liquid crystal display system of Figure 1.

Figure 9 is a schematic representation of one preferred form of the temperature range select of the liquid crystal display system of Figure 5.

4

DESCRIPTION OF THE PREFERRED EMBODIMENT

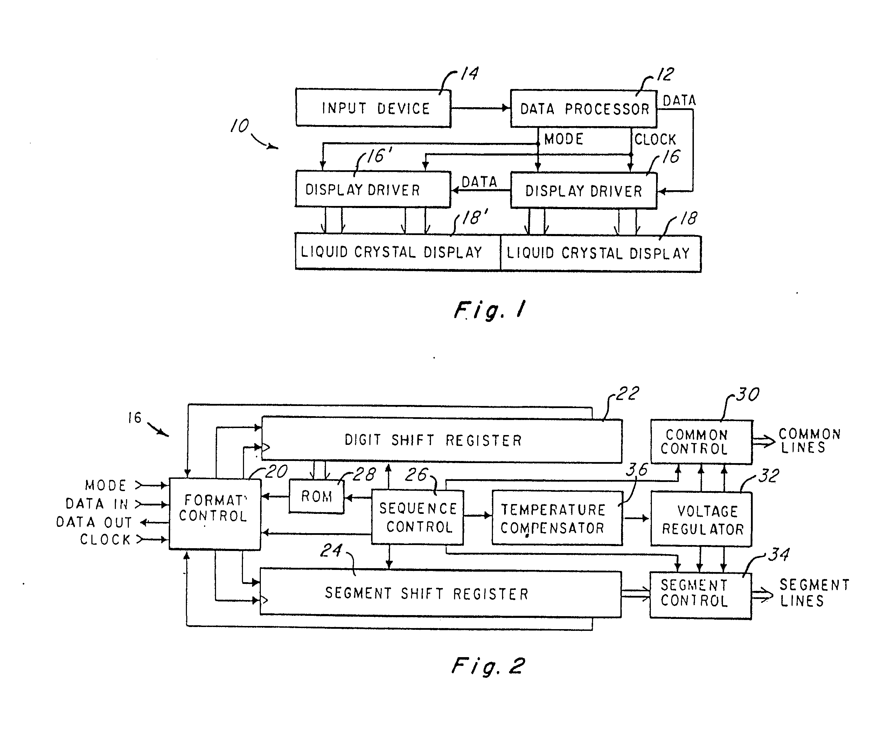

Referring to the drawings in general, and to Figure 1 in particular, shown therein and referred to by the general reference number 10 is a data processing system constructed in accordance with the preferred embodiment of the present invention. More particularly, the data processing system 10 comprises a data processor 12 which operates in a particular one of first and second operating modes depending upon input commands received from an input device 14. Although the present invention may be advantageously employed in data processing systems having a full range of computational capabilities and input options, the present description will be directed toward a data processing system 10 which has a data processor 12 constructed to perform operator selected operations, e.g. arithmetic, trignometic, etc., upon operands entered manually via a keyboard type input device 14.

In the first operating mode, the data processor 12 performs selected operations upon input data received from the input device 14, and provides output data in an encoded format generally in synchronization with a clock signal. In response to receiving a mode signal indicating that the data processor 12 is in the first operating mode, a first display driver 16 receives the output data provided by the data processor 12 in synchronization with the clock signal, and converts the received, encoded format data into a display format. The display driver 16 then displays the converted data in the display format via a suitable display 18. In the preferred form, the display driver 16 stores the data as received from the data processor 12 in the encoded format to obviate the necessity for the data processor 12 to periodically "refresh" the data. Preferably, the display driver 16 also stores the data after conversion from the encoded format into the display format in order to minimize the circuitry required to accomplish the conversion operation.

In the second operating mode, the data processor 12 performs selected operations upon input data received from the input device 14, and provides data in the display format generally in synchronization with the clock signal. In response to receiving a mode signal indicating that the data processor 12 is in the second operating mode, the display driver 16 receives the output data provided by the data processor 12 in synchronization with the clock signal, and then displays the data in the display format via the display 18. In the preferred form, the display driver 16 stores the data as received from the data processor 12 in the display format to obviate the necessity for the data processor 12 to periodically "refresh" the data.

If it is desired to provide a greater simultaneous output display capability, additional display drivers, such as the display driver 16' may be provided, together with an appropriate display 18'. In such a configuration, the display driver 16 will receive and display up to a predetermined maximum number of data elements as received from the data processor 12, with any additional data elements "overflowing" into the display driver 16'. Of course, additional display drivers (not shown) may be added to the chain so as to effectively increase the simultaneous output display capability of the data processing system 10.

In the preferred form of the display driver 16 shown in Figure 2, a format control 20 receives input data provided by the data processor 12 (see Figure 1) in synchronization with the clock signal. If the format control 20 determines from the mode signal that the data processor 12 is in the first operating mode, then the format control 20 will serially clock the received input data into a digit shift register 22 for storage therein. When the digit shift register 22 overflows, the format control 20 will provide the overflow data as output data for input to the next display driver 16', if provided. On the other hand, if the format control 20 determines from the mode signal that the data processor 12 is in the second operating mode, the format control 20 will serially clock the received input data into a segment shift register 24 for storage therein. When the segment shift register 24 is full, the format control 20 will provide the overflow data as output data for input to the next display driver 16', if provided.

Substantially independently of the cooperation of the format control 20 with the data processor 12, a sequence control 26 controls the sequential operation of the display-related portions of the display driver 16. Thus, for example, during each display time period, the sequence control 26 will sequentially enable the transfer of each of the various digits stored in the digit shift register 22 to a ROM 28 for conversion from the encoded format to the display format. Simultaneously, the sequence control 26 enables the format control 20 to shift the display formatted data provided serially by the ROM 28 into the segment shift register 24.

Periodically during each display time period, the sequence control 26 enables a common control 30 to selectively couple operating voltages provided by a voltage regulator 32 to selected ones of the common lines of the display 18. Generally in synchronization therewith, the sequence control 26 enables the segment shift register 24 to transfer selected portions of the segment data stored therein to a segment control 34. In response to the segment data, the segment control 34 selectively couples operating voltages provided by the voltage regulator 32 to the segment lines of the display 18.

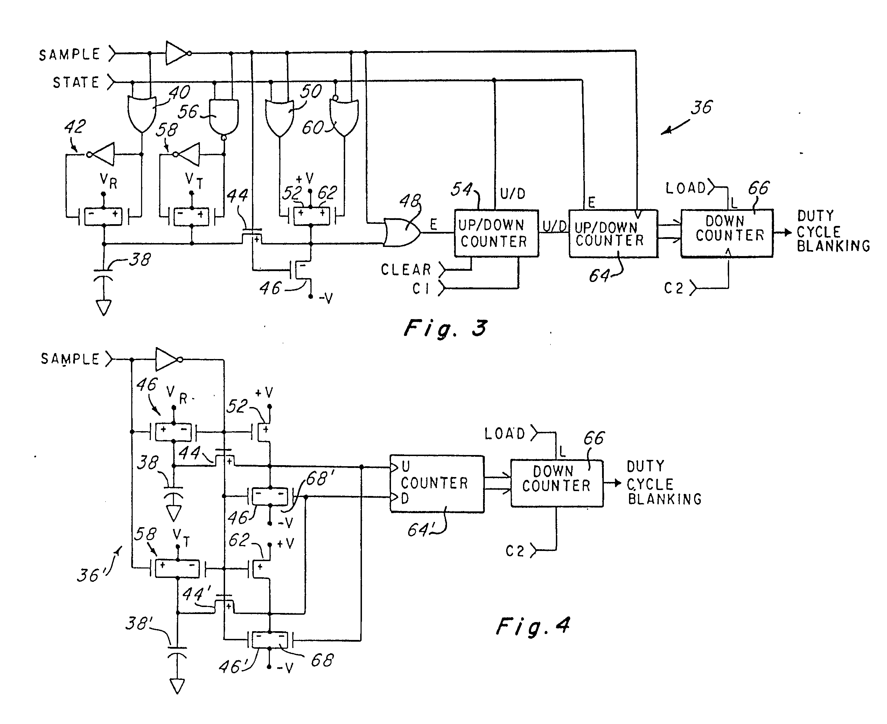

As will be clear to those skilled in the art, the sequence control 26 can be constructed to operate according to any one of several well known timing schemes which facilitate generation of appropriate operating voltage sequences for a selected display 18. In the form shown in Figure 2, the display driver 16 is particularly well suited for use with a liquid crystal type of display 18. In particular, a temperature compensator 36 is provided for monitoring the operating temperature of the liquid crystal display 18 and for interacting with the voltage regulator 32 to vary the effective RMS value of the applied operating voltages to maintain the contrast ratio within a predetermined range. In general, each inactive segment of the liquid crystal display 18 will be coupled to an "off segment" voltage, while each active segment will be coupled to an "on segment" voltage. Typically, the difference between the off and on segment voltages will be selected to provide a desired optical contrast ratio at a particular operating temperature. However, the same voltages may produce significantly different contrast ratios when the temperature of the segments vary from the design temperature. If, on the other hand, the segment voltages can be made to track the temperature-induced shift, the contrast ratio may be maintained relatively stable. For a more detailed discussion of the temperature-dependent response characteristics of liquid crystal displays, as well as one circuit technique for providing temperature compensation, reference may be made to an article entitled "A Novel Method of Temperature Compensation for Multiplexed Liquid Crystal Displays" by C. Hilsum, R. J. Holden, and E. P. Raynes in the 6 July 1978 issue of Electronics Letters (G. B.), Vol. 14, No. 14, Pp 430-432, published by the Institution of Electrical Engineers, Savoy Place, London WC2R OBL, England. However, two alternative, preferred forms for the temperature compensator 36 are shown in Figures 3 and 4.

In the temperature compensator 36 shown in Figure 3, a special thermometer segment 38 is provided as an integral portion of the liquid crystal display 18. For the purposes of the present invention, the thermometer segment 38 may be considered to be a lossless capacitor, the capacitance of which is constant below a threshold voltage but steadily increases up to threefold with increasing applied voltage. In addition, the capacitance exhibits the same rate of temperature variation as the rate of contrast ratio variation for optical purposes. The temperature compensator 36 is constructed to take advantage of this phenonmenon by measuring the capacitance of the thermometer segment 38 at selected voltages above and below the threshold voltage.

In the illustrated form, the sequence control 26 provides a Sample signal in each of a logical low and logical high condition during each of a logical low and logical high condition of a State signal, thereby defining four operating states of the temperature compensator 36. In the first operating state, when both the Sample and State signals are in the logical low condition, an OR gate 40 enables a conventional transfer gate 42 to couple the thermometer segment 38 to a reference voltage $V_R$ provided by the voltage regulator 32 at a selected RMS value below the threshold voltage, e.g. zero (0) volts RMS, to precondition the thermometer segment 38 to a reference capacitance $C_R$. Simultaneously, a transistor 44 is disabled and a transistor 46 is enabled thereby clamping a first input of an OR gate 48 to a logical low potential -V. In the second operating state, when the Sample signal is in the logical high condition and the State signal is in the logical low condition, the transfer gate 42 and the transistor 46 are each disabled, and the transistor 44 is enabled thereby coupling the thermometer segment 38 to the first input of the OR gate 48. Simultaneously, an OR gate 50 enables a transistor 52, thereby charging the thermometer segment 38 toward a logical high potential +V. However, the simultaneous existence of logical low conditions on both inputs to the OR gate 48 and to an up/down control input, enables an up/down counter 54 to count up, generally in synchronization with a first clock signal C1, from an initial value of zero (0) established in response to a clear signal provided by the sequence control 26 during the first operating state. As soon as the transistor 52 has charged the thermometer segment 38 to a predetermined logical threshold voltage, the OR gate 48 will disable the up/down counter 54, thereby capturing a reference count which is related to the time required to charge the thermometer segment 38 from the reference voltage $V_R$ to the logical threshold voltage.

In the third operating state, when the Sample signal is again in the logical low condition but the State signal is in the logical high condition, an AND gate 56 enables a conventional transfer gate 58 to couple the thermometer segment 38 to a test voltage $V_T$ provided by the voltage regulator 32 at a selected RMS value above the threshold voltage, to precondition the thermometer segment 38 to a test capacitance $C_T$. As in the first operating state, the transistor 44 is disabled and the transistor 46 is enabled, again clamping the first input of the OR gate 48 to the logical low potential -V. In the fourth operating state, the transfer gate 58 and the transistor 46 are disabled, and the transistor 44 is enabled thereby coupling the first input of the OR gate 48 to the thermometer segment 38. Simultaneously, an OR gate 60 enables a transistor 62 to charge the thermometer segment 38 toward the logical high potential +V. The simultaneous existence of logical low conditions on both inputs to the OR gate 48 and to the logical high condition on the up/down control input, enables the up/down counter 54 to count down from the reference count in synchronization with the clock signal Cl. As soon as the transistor 62 has charged the thermometer segment 38 to the logical threshold voltage, the OR gate 48 will disable the up/down counter 54, thereby capturing a difference count which is indicative of the difference beween the time required to charge the thermometer segment 38 from the reference voltage $V_R$ to the logical threshold voltage and the time required to charge the thermometer segment 38 from the test voltage $V_T$ to the logical threshold voltage.

As will be clear to those skilled in the art, the time required to charge the thermometer segment 38 is related to both the capacitance thereof as well as the level of charging current coupled thereto. Therefore, by constructing each of the transistors 52 and 62 to provide appropriately selected levels of current, it is possible to determine the capacitance of the thermometer segment 38 at the time of measurement. For example, assume that the thermometer segment 38 has been preconditioned by the transfer gate 42 to the capacitance which is characteristic of the particular liquid crystal display 18 when charged to a reference voltage $V_R$ below the thfeshold voltage. Then, upon coupling the thermometer segment 38 to the potential +V via the transistors 52 and 44, the voltage at the first input of the OR gate 48 will rise at a rate related to the reference current $I_R$ provided by the transistor 52. Thus, the reference count captured by the up/down counter 54 will provide a relative measure of the reference capacitance $C_R$.

Assume now that the thermometer segment 38 has been preconditioned by the transfer gate 58 to the capacitance which is characteristic of the particular liquid crystal display 18 when charged to a selected test voltage $V_T$ above the threshold voltage. Then, upon coupling the thermometer segment 38 to the potential +V via the transistors 62 and 44, the voltage at the first input of the OR gate 48 will rise at a rate related to the test current $I_T$ provided by the transistor 62. Thus, the difference count captured by the up/down counter 54 will be zero (0), if and only if the ratio of the test current $I_T$ provided by the transistor 62 to the test capacitance $C_T$ of the thermometer segment 38 is the same as the ratio of the reference current $I_R$ provided by the transistor 52 to the reference capacitance $C_R$ of the thermometer segment 38. Stated another way, the difference count will be zero (0) if and only if the ratio of the test capacitance $C_T$ of the thermometer segment 38 to the reference capacitance $C_R$ thereof is the same as the ratio of the test current $I_T$ to the reference current $I_R$.

Recalling that the test capacitance $C_T$ is related both to temperature and to the test voltage $V_T$ , it will be evident that changes in temperature as determined from changes in the test capacitance $C_T$ may be compensated for by suitable changes in the test voltage. Thus, changes may be made in the test voltage $V_T$ until the test capacitance $C_T$ is just sufficient so as to be charged by the test current $I_T$ at the same rate as in the reference case. In other words, the ratio of the test capacitance $C_T$ to the reference capacitance $C_R$ may be converged to the same, predetermined ratio as the test current $I_T$ bears to the reference current $I_R$ by changing the test voltage $V_T$. In the preferred embodiment, the test voltage $V_T$ is changed using a duty cycle blanking technique.

At the start of each of the first operating states, that is, when the State and Sample signals are both in the logical low condition, an up/down counter 64 is enabled and will either increment or decrement a duty cycle blanking count maintained therein depending upon the polarity of the difference count last captured by the up/down counter 54. For example, the duty cycle blanking count will be decremented if the last difference count was positive, indicating that the test capacitance $C_T$ was too small relative to the reference capacitance $C_R$. The new duty cycle blanking count is thereafter periodically loaded into a down counter 66, and the voltage regulator 32 simultaneously disabled. In synchronization with a second clock signal C2, the down counter 66 will decrement the loaded duty cycle blanking count, until an underflow condition occurs. Upon underflow, the down counter 66 will enable the voltage regulator 32. Since the voltage regulator 32 will now be disabled for one less period of the clock signal C2, the RMS values of the various operating voltages, including the test voltage $V_T$, will be increased. Under the influence of the increased test voltage $V_T$, the thermometer segment 38 will exhibit more test capacitance $C_T$.

On the other hand, the duty cycle blanking count will be incremented if the preceding difference count was negative, indicating that the test capacitance $C_T$ was too large relative to the reference capacitance $C_R$. The increase in the duty cycle blanking count will result in a later occurrence of the underflow condition, thereby decreasing the effective RMS value of the various operating voltages, including the test voltage $V_T$. Under the influence of the reduced test voltage $V_T$, the thermometer segment 38 will exhibit less test capacitance $C_T$.

For example, one embodiment has been constructed to provide a preconditioning period of the order of one (1) second and a sampling interval of the order of 100 microseconds. When used with a liquid crystal display 18 manufactured by Shinshu Seiki Co., Ltd., and commercially available from Epson America, Inc. of Torrence, California, as part number LD-B955B, 1.11 was selected as the ratio of the test current $I_T$ to the reference current $I_R$ and thus the ratio of the test capacitance $C_T$ to the reference capacitance $C_R$. Thus, the transistor 62 was constructed to provide 11% more current than the transistor 52. This particular ratio was selected because, upon the convergence thereto of the ratio of the test capacitance $C_T$ to the reference capacitance $C_R$, the test voltage $V_T$ will approximate the optical threshold voltage of the display 18, and thus may be used directly as the off segment voltage. Since the on segment voltage may be generated relative to the off segment voltage, using the same duty cycle blanking technique, both will now automatically track the temperature-induced shift in optical response.

In the temperature compensator 36 shown in Figure 4, first and second, substantially identical thermometer segments 38 and 38' are provided as an integral portion of the liquid crystal display 18. Recall, however, that the capacitance of each of the thermometer segments 38 and 38' is relatively constant below a threshold voltage, and steadily increases up to threefold with increasing applied voltage. Since the capacitance of each exhibits the same rate of temperature variation as the rate of contrast ratio variation, the temperature compensator 36' may compensate for the latter variation by measuring the capacitance of the thermometer segment 38' at a selected voltage above the threshold voltage relative to the capacitance of the thermometer segment 38 at a voltage below the threshold voltage.

In the illustrated form, the sequence control 26 provides a Sample signal in each of a logical low and a logical high condition, thereby defining two operating states of the temperature compensator 36'. In the first operating state, when the Sample signal is in the logical low condition, a conventional transfer gate 42 couples the thermometer segment 38 to a reference voltage $V_R$ provided by the voltage regulator 32 at a selected RMS voltage below the threshold voltage, e.g. zero (0) volts RMS, to precondition the thermometer segment 38 to a reference capacitance $C_R$. The logical low condition of the Sample signal also enables a conventional transfer gate 58 to couple the thermometer segment 38' to a test voltage $V_T$ provided by the voltage regulator 32 at a selected RMS value above the threshold voltage, to precondition the thermometer segment 38' to a test capacitance $C_R$. Simultaneously, transistors 44 and 44' are disabled, and transistors 46 and 46' are enabled, thereby clamping each of the up and down count inputs of an up/down counter 64' to a logical low potential -V.

In the second operating state, when the Sample signal is in the logical high condition, the transfer gates 42 and 58 and the transistors 46 and 46' are each disabled, and the transistors 44 and 44' each enabled, thereby coupling the thermometer segments 38 and 38' respectively to the up and down count inputs of the up/down counter 64'. Simultaneously, transistors 52 and 62 are enabled, thereby starting each of the thermometer segments 38 and 38' charging toward a logical high potential +V. If the first thermometer segment 38 charges to the gate threshold voltage of a transistor 68 before the second thermometer segment 38' charges to the gate threshold voltage of a transistor 68', indicating that the test capacitance $C_T$ is too large, then the transistor 68 will be enabled, clamping the down count input of the up/down counter 64' to the logical low potential -V. As soon as the thermometer segment 38 has charged to the logical threshold voltage of the up count input, the up/down counter 64' will increment a duty cycle blanking count maintained therein. The incremented duty cycle blanking count will thereafter be periodically loaded into a down counter 66, and the voltage regulator 32 simultaneously disabled. In synchronization with a clock signal C2, the down counter 66 will decrement the loaded duty cycle blanking count, until an underflow condition occurs. Upon underflow, the down counter 66 will enable the voltage regulator 32. Since the voltage regulator 32 will now be disabled for one more period of the clock signal C2, the RMS values of the various operating voltages, including the test voltage $V_T$ will be decreased. Under the influence of the lower test voltage $V_T$, the thermometer segment 38' will exhibit less test capacitance $C_T$.

On the other hand, if the thermometer segment 38' is the first to charge to the gate threshold voltage of the transistor 68', indicating that the test capacitance $C_T$ is too small, the transistor 68' will be enabled, clamping the up clock input to the logical low potential -V. As soon as the thermometer segment 38' has charged to the logical threshold voltage of the down count input, the up/down counter 64' will decrement the duty cycle blanking count maintained therein. The decremented duty cycle blanking count will thereafter be periodically loaded into the down counter 66', thereby advancing by one clock cycle the occurrence of the underflow condition and increasing the effective RMS value of the various operating voltages, including the test voltage $V_T$. Under the influence of the increased test voltage $V_T$, the thermometer segment 38' will exhibit more test capacitance $C_T$.

For example, one embodiment has been constructed to provide a preconditioning period of the order of one (1) second and a sampling interval of the order of 100 microseconds. When used with a liquid crystal display 18 manufactured by Shinshu Seiki Co., Ltd., and commercially available from Epson America, Inc. of Torrence, California, as part number LD-B955B, 1.11 was selected as the ratio of the test current $I_T$ to the reference current $I_R$ and thus the ratio of the test capacitance $C_T$ to the reference capacitance $C_R$. Thus, the transistor 62 was constructed to provide 11% more current than the transistor 52. This particular ratio was selected because, upon the convergence thereto of the ratio of the test capacitance $C_T$ to the reference capacitance $C_R$, the test voltage $V_T$ will approximate the optical threshold voltage of the display 18, and thus may be used directly as the off segment voltage. Since the on segment voltage may be generated relative to the off segment voltage, using the same duty cycle blanking technique, both will now automatically track the temperature-induced shift in optical response.

In summary, a data processing system 10 has been described wherein a data processor 12 performs selected operations on input data provided by an input device 14, and provides output data in either an encoded or a decoded format in respective first and second operating modes. One or more display drivers 16-16", responsive to the operating mode of the data processor 12, receives the output data, converts any data received in the encoded format, and displays all received data in the display format via associated displays 18-18". For displays of the liquid crystal type, temperature compensation for shifts in optical contrast may be provided using either of two disclosed techniques:

(1) converging to a predetermined ratio value the ratio of the capacitances of a segment of the display when preconditioned using a predetermined reference voltage and a variable test voltage; or (2) converging to a predetermined ratio value the ratio of the capacitance of a first segment of the display when preconditioned using a predetermined reference voltage to the capacitance of a second segment of the display when preconditioned using a variable test voltage. The first technique has the advantage of using less of the active surface area of the display 18, while the second technique has the advantage of speed of convergence since the reference and test capacitances are measured simultaneously rather than sequentially.

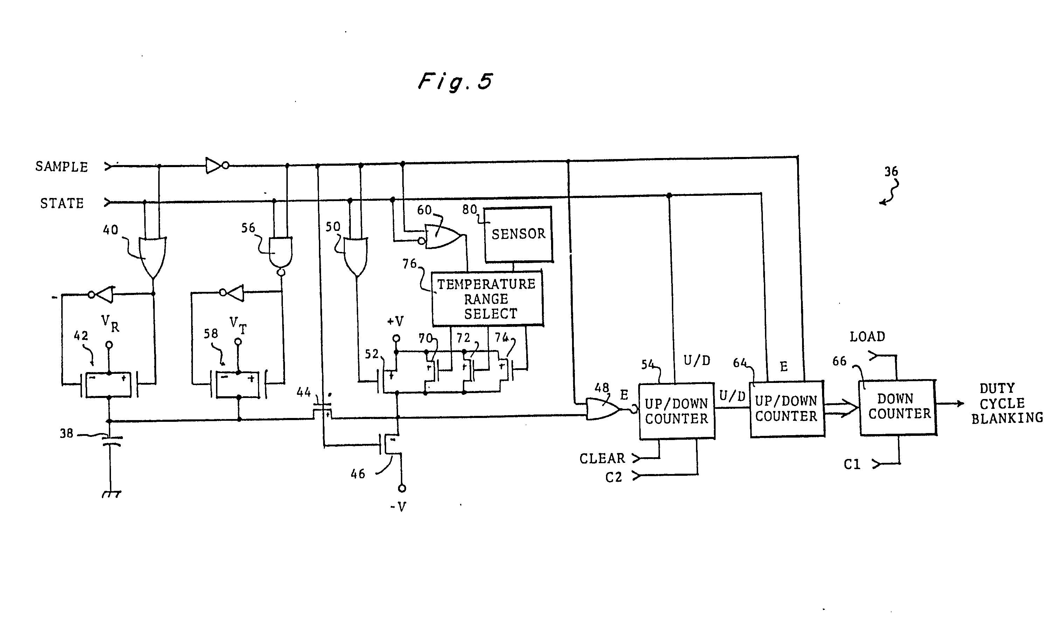

In the temperature compensator 36 shown in Figure 5, a special thermometer segment 38 is provided as an integral portion of the liquid crystal display 18. For the purposes of the present invention, the thermometer segment 38 may be considered to be a lossless capacitor, the capacitance of which is constant below a threshold voltage but steadily increases up to threefold with increasing applied voltage. In addition, the capacitance exhibits approximately the same rate of temperature variation as the rate of contrast ratio variation for optical purposes. The temperature compensator 36 is constructed to take advantage of this phenonmenon by measuring the capacitance of the thermometer segment 38 at selected voltages above and below the threshold voltage.

In the illustrated form, the sequence control 26 provides a SAMPLE signal in each of a logical low and logical high condition during each of a logical low and logical high condition of a STATE signal, thereby defining four operating states of the temperature compensator 36. In the first operating state, when both the SAMPLE and STATE signals are in the logical low condition, an OR gate 40 enables a conventional transfer gate 42 to couple the thermometer segment 38 to a reference voltage $V_R$ provided by the voltage regulator 32 at a selected RMS value below the threshold voltage, e.g. zero (0) volts RMS, to precondition the thermometer segment 38 to a reference capacitance $C_R$. Simultaneously, a transistor 44 is disabled and a transistor 46 is enabled thereby clamping a first input of an OR gate 48 to a logical low potential -V. In the second operating state, when the SAMPLE signal is in the logical high condition and the STATE signal is in the logical low condition, the transfer gate 42 and the transistor 46 are each disabled, and the transistor 44 is enabled thereby coupling the thermometer segment 38 to the first input of the OR gate 48. Simultaneously, an OR gate 50 enables a transistor 52, thereby charging the thermometer segment 38 toward a logical high potential +V. However, the simultaneous existence of logical low conditions on both inputs to the OR gate 48 and to an up/down control input, enables an up/down counter 54 to count up, genrally in synchronization with a first clock signal C1, from an initial value of zero (0) established in response to a clear signal provided by the sequence control 26 during the first operating state. As soon as the transistor 52 has charged the thermometer segment 38 to a predetermined logical threshold voltage, the OR gate 48 will disable the up/down counter 54, thereby capturing a reference count which is related to the time required to charge the thermometer segment 38 from the reference voltage $V_R$ to the logical threshold voltage.

In the third operating state, when the SAMPLE signal is again in the logical low condition but the STATE signal is in the logical high condition, an AND gate 56 enables a conventional transfer gate 58 to couple the thermometer segment 38 to a test voltage $V_T$ provided by the voltage regulator 32 at a selected RMS value above the threshold voltage, to precondition the thermometer segment 38 to a test capacitance $C_T$. As in the first operating state, the transistor 44 is disabled and the transistor 46 is enabled, again clamping the first input of the OR gate 48 to the logical low potential -V. In the fourth operating state, the transfer gate 58 and the transistor 46 are disabled, and the transistor 44 is enabled thereby coupling the first input of the OR gate 48 to the thermometer segment 38. Simultaneously, an OR gate 48 enables one of transistors 70, 72, and 74 selected by temperature range select 76 to charge the thermometer segment 38 toward the logical high potential +V. The operation of temperature range select 76 will be more fully explained below. The simultaneous existence of logical low conditions on both inputs to the OR gate 48 and to the logical high condition on the up/down control input, enables the up/down counter 54 to count down from the reference count in synchronization with the clock signal Cl. As soon as the selected one of transistors 70, 72, and 74 has charged the thermometer segment 38 to the logical threshold voltage, the OR gate 48 will disable the up/down counter 54, thereby capturing a difference count which is indicative of the difference between the time required to charge the thermometer segment 38 from the reference voltage $V_R$ to the logical threshold voltage and the time required to charge the thermometer segment 38 from the test voltage $V_T$ to the logical threshold voltage.

As will be clear to those skilled in the art, the time required to charge the thermometer segment 38 is related to both the capacitance thereof as well as the level of charging current coupled thereto. Therefore, by constructing each of the transistors 52, 70, 72 and 74 to provide appropriately selected levels of current, it is possible to determine the capacitance of the thermometer segment 38 at the time of measurement. For example, assume that the thermometer segment 38 has been preconditioned by the transfer gate 42 to the capacitance which is characteristic of the particular liquid crystal display 18 when charged to a reference voltage $V_R$ below the threshold voltage. Then, upon coupling the thermometer segment 38 to the potential +V via the transistors 52 and 44, the voltage at the first input of the OR gate 48 will rise at a rate related to the reference current $I_R$ provided by the transistor 52. Thus, the reference count captured by the up/down counter 54 will provide a relative measure of the reference capacitance $C_R$.

Assume now that the thermometer segment 38 has been preconditioned by the transfer gate 58 to the capacitance which is characteristic of the particular liquid crystal display 18 when charged to a selected test voltage $V_T$ above the threshold voltage. Then, upon couping the thermometer segment 38 to the potential +V via one of the transistors 70, 72 and 74 transistor 44, the voltage at the first input of the OR gate 48 will rise at a rate related to the test current $I_T$ provided by the selected one of the transistors 70, 72 and 74. Thus, the difference count captured by the up/down counter 54 will be zero (0), if and only if the ratio of the test current $I_T$ provided by the selected one of the transistors 70, 72, 74 to the test capacitance $C_T$ of the thermometer segment 38 is the same as the ratio of the reference current $I_R$ provided by the transistor 52 to the reference capacitance $C_R$ of the thermometer segment 38. Stated in another way, the difference count will be zero (0) if and only if the ratio of the test capacitance $C_T$ of the thermometer segment 38 to the reference capacitance $C_R$ thereof is the same as the ratio of the selected test current $I_T$ to the reference current $I_R$.

Recalling that the test capacitance $C_T$ is related both to temperature and to the the voltage $V_T$, it will be evident that changes in temperature as determined from changes in the test capacitance $C_T$ may be compensated for by suitable changes in the test voltage. Thus, changes may be made in the test voltage $V_T$ until the test capacitance $C_T$ is just sufficient so as to be charged by the test current $I_T$ at the same rate as in the reference case. In other words, the ratio fo the test capacitance $C_T$ to the reference capacitance $C_R$ may be converged to the same, predetermined ratio as the test current $I_T$ bears to the reference

22  **0044152**

current $I_R$ by changing the test voltage $V_T$. In the preferred embodiment, the test voltage $V_T$ is changed using a duty cycle blanking technique.

At the start of each of the first operating states, that is, when the State and Sample signals are both in the logical low condition, an up/down counter 64 is enabled and will either increment or decrement a duty cycle blanking count maintained therein depending upon the polarity of the difference count last captured by the up/down counter 54. For example, the duty cycle blanking count will be decremented if the last difference count was positive, indicating that the test capacitance $C_T$ was too small relative to the reference capacitance $C_R$. The new duty cycle blanking count is thereafter periodically loaded into a down counter 66, and the voltage regulator 18 simultaneously disabled. In synchronization with a second clock signal C2, the counter 66 will decrement the loaded duty cycle blanking count, until an underflow condition occurs. Upon underflow, the down counter 66 will enable the voltage regulator 32. Since the voltage regulator

32 will now be disabled for one less period of the clock signal C2, the RMS values of the various operating voltages, including the test voltage $V_T$, will be increased. Under the influence of the increased test voltage $V_T$, the thermometer segment 38 will exhibit more test capacitance $C_T$.

On the other hand, the duty cycle blanking count will be incremented if the preceding difference count was negative, indicating that the test capacitance $C_T$ was too large relative to the reference capacitance $C_R$. The increase in the duty cycle blanking count will result in a later occurrence of the underflow condition in down counter 66, thereby decreasing the effective RMS value of the various operating voltages, including the test voltage $V_T$. Under the influence of the reduced test voltage $V_T$, the thermometer segment 38 will exhibit less test capacitance $C_T$.

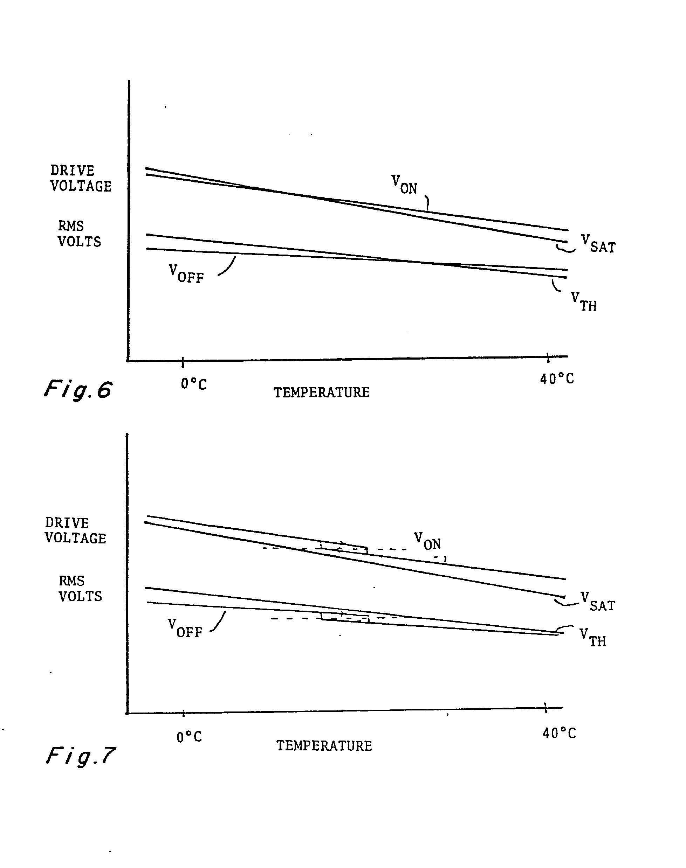

As previously mentioned, temperature range select 76 enables operation of one of the transistors 70, 72 and 74 at the time determined by OR gate 60. It has been found that the temperature change in capacitance of liquid crystal display segments, such as thermometer segment 38 does not exactly track the temperature change in contrast ratio of liquid crystal display segments. This failure of exact temperature tracking is most notable at the temperature extremes. Figure 6 illustrates a typical result when following the teaching of the technique previously described above. In Figure 6 $V_{TH}$ represents the threshold voltage of the liquid crystal display segments and $V_{SAT}$ represents the saturation voltage, that is the voltage at which the required contrast ratio is achieved. Also illustrated in Figure 6 are $V_{OFF}$ and $V_{ON}$ which are the RMS values of the drive voltages produced by voltage regulator 32 for application to the inactive display segments and the active display segments, respectively. As stated above, the voltages $V_{OFF}$ and $V_{ON}$ are determined by the duty cycle blanking count. For proper operation of the display $V_{OFF}$ should be less than $V_{TH}$ and $V_{ON}$ should be greater than $V_{SAT}$ throughout the operating temperature range. The failure of accurate temperature tracking of the thermometer segment capacitance with the display parameters of interest, $V_T$ and $V_{SAT}$ is clearly illustrated in Figure 6, in which the temperature compensator employs only a single capacitance ratio. When employing this system with only a single capacitance ratio $V_{OFF}$ typically exceeds $V_{TH}$ at high temperatures and $V_{ON}$ is typically less than $V_{SAT}$ at low temperatures. The failure of accurate temperature tracking can be seen in that the slope of the line for $V_{ON}$ is not equal to the slope of the line for $V_{SAT}$ nor is the slope of the line for $V_{OFF}$ equal to the slope of the line for $V_T$.

According to the present invention, one solution to this problem is to employ a multiple capacitance ratio temperature compensator. The operating temperature range is divided into several segments, each temperature range segment having a particular capacitance ratio selected for insuring that $V_{ON}$ is greater than $V_{SAT}$ and that $V_{OFF}$ is less than $V_{TH}$. A system employing two temperature ranges with two capacitance ratios is illustrated in Figure 7. Note the overlap of capacitance ratios in the region between the two temperature range segments. That is, both $V_{ON}$ and $V_{OFF}$ are multi-valued functions near the intersection between the two temperature range segments. The value taken by the capacitance ratio, and hence the value of the voltages $V_{ON}$ and $V_{OFF}$ generated by voltage regulator 32 depends upon the previous capacitance ratio state.

This range overlap is provided to reduce the possibility of repetitive capacitance ratio switching when the display temperature is near the boundary between the two different temperature range segments.

Referring now again to Figure 5, sensor 80 is disposed at or near display 18 (which includes thermometer segment 38) for generating a signal indicating the display temperature. This signal is applied to temperature range select 76 along with the output of OR gate 60. Temperature range select 76 uses the signal from sensor 80 to determine which of three predetermined operating temperature range segments includes the temperature of display 18. Only one of the transistors 70, 72 and 74 is enabled by OR gate 60 through temperature select 76 depending upon the particular temperature range segment. Each of the transistors 70, 72 and 74 is constructed to provide a test current $I_T$ which causes the test voltage $V_T$ to converge to a value appropriately selected for the corresponding temperature range segment. That is, the test current provided by the selected transistor charges thermometer segment 38 at a rate which causes the duty cycle count stored in up/down counter 58 to converge to a particular value which sets the appropriate voltages $V_T$, $V_{ON}$ and $V_{OFF}$.

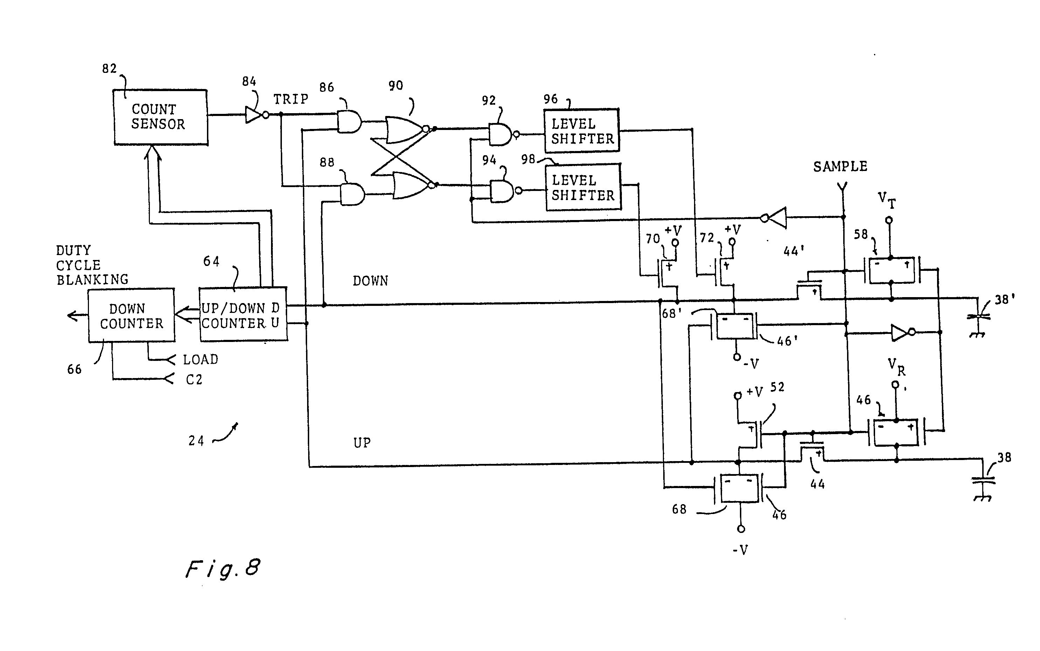

In the temperature compensator 36 shown in Figure 8, first and second, substantially identical thermometer segments 38 and 38' are provided as an integral portion of the liquid crystal display 18. Recall, however, that the capacitance of each of the thermometer segments 38 and 38' is relatively constant below a threshold voltage, and steadily increases up to threefold with increasing applied voltage. Since the capacitance of each exhibits approximately the same rate of temperature variation as the rate of contrast ratio variation, the temperature compensator 38' may compensate for the latter variation by measuring the capacitance of the thermometer segment 38' at a selected voltage above the threshold voltage relative to the capacitance of the thermometer segment 38 at a voltage below the threshold voltage.

In the illustrated form, the sequence control 26 provides a SAMPLE signal in each of a logical low and a logical high condition, thereby defining two operating states of the temperature compensator 36.  In the first operating state, when the SAMPLE signal is in the logical high condition, a conventional transfer gate 46 couples the thermometer segment 38 to a reference voltage $V_R$ provided by the voltage regulator 32 at a selected RMS voltage below the threshold voltage, e.g. zero (0) volts RMS, to precondition the thermometer segment 38 to a reference capacitance $C_R$.  The logical high condition of the SAMPLE signal also enables a conventional transfer gate 58 to couple the thermometer segment 38' to a test voltage $V_T$ provided by the voltage regulator 32 at a selected RMS value above the threshold voltage, to precondition the thermometer segment 38' to a test capacitance $C_R$. Simultaneously, transistors 44 and 44' are disabled, and transistors 46 and 46' are enabled, thereby clamping each of the up and down count inputs of an up/down counter 64 to a logical low potential −V.

In the second operating state, when the SAMPLE signal is in the logical low condition, the transfer gates 46 and 58 and the transistors 46 and 46' are each disabled, and the transistors 44 and 44' each enabled, thereby coupling the thermometer segments 38 and 38' respectively to the up and down count inputs of the up/down counter 64.  Simultaneously, transistors 52 and a selected one of transistors 70 and 72 are enabled, thereby starting each of the thermometer segments 38 and 38' charging toward a logical high potential +V. If the first thermometer segment 38 charges to the gate threshold voltage of a transistor 68 before the second thermometer segment 38' charges to the gate threshold voltage of a transistor 68', indicating that the test capacitance $C_T$ is too large, then the transistor 68 will be enabled, clamping the down count input of the up/down counter 64 to the logical low potential -V. As soon as the thermometer segment 38 has charged to the logical threshold voltage of the up count input, thus generating an UP signal, the up/down counter 64 will increment a duty cycle blanking count maintained therein. The incremented duty cycle blanking count will thereafter be periodically loaded into a down counter 66, and the voltage regulator 32 simultaneously disabled. In synchonization with a clock signal C2, the down counter 66 will decrement the loaded duty cycle blanking count, until an underflow condition occurs. Upon underflow, the down counter 66 will enable the voltage regulator 32. Since the voltage regulator 32 will now be disabled for one more period of the clock signal C2, the RMS values of the various operating voltages, including the test voltage $V_T$ will be decreased. Under the influence of the lower test voltage $V_T$, the thermometer segment 38' will exhibit less test capacitance $C_T$.

On the other hand, if the thermometer segment 38' is the first to charge to the gate threshold voltage of the transistor 68', indicating that the test capacitance $C_T$ is too small, the transistor 68' will be enabled, clamping the up clock input to the logical low potential -V. As soon as the thermometer segment 38' has charged to the logical threshold voltage of the down count input, thus generating a DOWN signal, the up/down counter 64 will decrement the duty cycle blanking count maintained therein. The decremented duty cycle blanking count will thereafter be periodically loaded into the down counter 66, thereby advancing by one clock cycle the occurrence of the underflow condition and increasing the effective RMS value of the various operating voltages, including the test voltage $V_T$. Under the influence of the increased test voltage $V_T$, the thermometer segment 26 will exhibit more test capacitance $C_T$.

The mechanism for selecting one of the transistors 70 or 72 operates as follows. The duty cycle blanking count in up/down counter 64 is applied to a count sensor 82. As described in detail above, the duty cycle blanking count within up/down counter 64 is a function of the actual temperature of the thermometer segments 38 and 38' and the particular charging transistor 70 or 72 selected. Therefore, the count within up/down counter 64 may be employed in a manner equivalent to sensor 80 illustrated in Figure 5. Count sensor 82 includes a plurality of invertors and NOR gates for generating a logical low signal when the duty cycle blanking count reaches a predetermined number. After inversion by invertor 84 a TRIP signal is generated having a logical high level when the duty cycle blanking count reaches the predetermined number sensed by state sensor 82. This TRIP signal is applied to one input of each of AND gates 86 and 88. AND gate 86 also has the UP signal applied to its other input. Similarly AND gate 88 has the down signal applied to its other input. The outputs of AND gates 86 and 88 are applied to the latch circuit 90. Latch circuit 90 assumes one of two stable states depending upon the inputs applied via AND gates 86 and 84 in a manner which will be described in further detail above. The two outputs of latch circuit 90 are applied to one input of the respective NAND gates 92 and 94. Also applied to one input of each of NAND gates 92 and 94 is an inverted SAMPLE signal. Depending upon the state of latch counter 90, one of the NAND gates 92 and 94 is enabled during the time of the SAMPLE signal. The output of NAND gate 80 is applied to level shifter 96 and the output of level shifter 96 is applied to the gate of transistor 72. Similarly, the output of NAND gate 94 is applied to level shifter 98 which applies its output to the gate of transistor 70. Thus depending upon the state of latch circuit 90, one of the level shifter 96 or 98 applies a signal to one of the respective transistors 72 and 70 to turn one of these transistors on.

The state of latch circuit 90 is determined as follows. If the duty cycle blanking count stored in up/down counter 64 does not equal the predetermined number sensed by state sensor 82, then the TRIP signal is not produced. Thus both AND gates 86 and 88 are disabled and the state of latch circuit 90 is unchanged. Thus the particular transistor 70 or 72 selected remains the same if the duty cycle blanking count does not equal the count sensed by count sensor 82. In the event that the duty cycle blanking count does equal the predetermined count of count sensor 82, then the TRIP signal is produced. This TRIP signal enables both AND gates 86 and 88. In this state, the state of latch circuit 90 is determined by whether an UP or a DOWN signal is applied to up/down counter 64. This UP or DOWN signal is generated in a manner fully described above. Depending on which of these signals is produced and the current state of latch circuit 90, the latch circuit 90 may either remain unchanged or may change state.

In ordinary operation this system works as follows. Assume that the liquid crystal display including thermometer segments 38 and 38' were initially in a cold environment, such as the left hand portion of the curves in Figure 7, and then was moved into a warmer environment occupying the right portion of Figure 7. After such a change the duty cycle blanking count in up/down counter 64 would be incorrect for the new conditions. This would have the effect of making the voltage $V_T$ also incorrect for the new temperature. This would have the effect of preconditioning thermometer segment 38' to a higher test capacitance than that required for a tie in the race during the charging of the thermometer segments 38 and 38'. Under this increased capacitance of thermometer segment 38', the thermometer segment 38 will be charged first thereby generating the UP signal. This UP signal will increment the count within up/down counter 64. Assuming that the change in temperature is a relatively large one, the count in up/down counter 64 will be incremented a number of times. Thus the duty cycle blanking count stored in up/down counter 64 will be continually increased, thereby increasing the blanking time of the various voltages produced by voltage regulator 32 reducing their RMS values. Under this influence the thermometer segment 38' will be preconditioned to a lower and lower test capacitance, thus bringing the charging time for generating the UP and DOWN signals closer and closer together. If, as postulated above, the change in temperature is a great one, then the incrementing of the duty cycle blanking count will continue until the duty cycle blanking count equals the predetermined number sensed by count sensor 82. It is certain that the count will pass through the count sensed by count sensor 82 if the count is changing between a relatively low value to a relatively high value, because the count is always changed one bit at a time. If the UP signal is still produced, that is if the duty cycle blanking count stored within up/down counter 64 has not yet reached its equalibrium value, then the UP signal is enabled

by the trip signal through AND gate 86 and is applied to latch circuit 90. This changes the state of latch circuit 90, thereby switching from transistor 72 to transistor 70. This switching then changes the charging rate of thermometer segment 78' and, as illustrated in Figure 7, shifts the lines of the temperature dependent values $V_{ON}$ and $V_{OFF}$.

As will be understood from the explanation above, each time the temperature of the liquid crystal display changes from one temperature region to another temperature region, the duty cycle blanking count must pass through the predetermined number sensed by count sensor 82, thereby enabling latch circuit 90 to be changed to another state. Because latch circuit 90 may be set in either state when the duty cycle blanking count equals the predetermined count sensed by state sensor 82, this circuit automatically gives the range overlap illustrated in Figure 7.

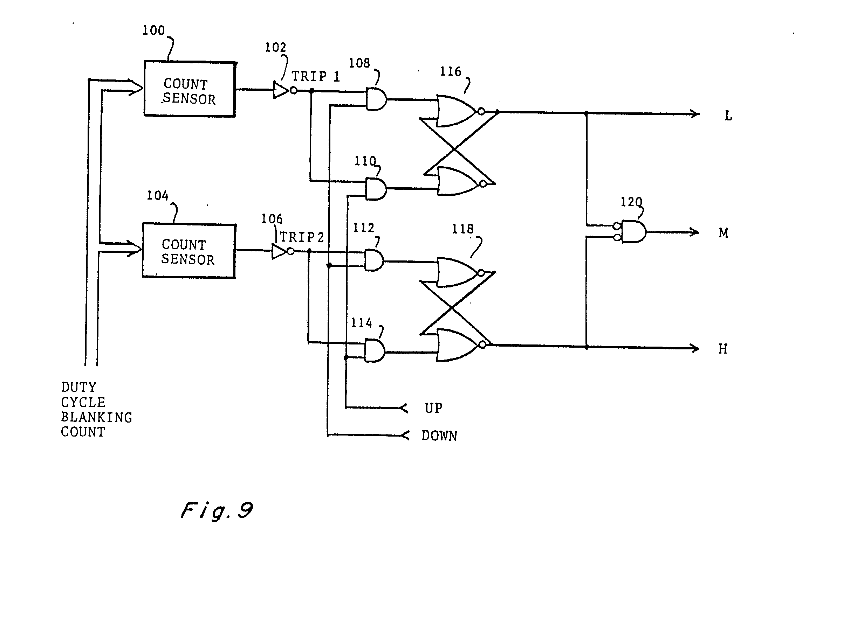

Figure 9 illustrates a temperature range select which selects one of three different states, such as temperature range select 76 illustrated in Figure 5. The duty cycle blanking count is applied to two count sensors 100 and 104. Together count sensor 100 and inverter 102 produces a TRIP 1 signal when the duty cycle blanking count is a first predetermined value. This TRIP 1 signal is applied to one input of both AND gates 108 and 110. Similarly, count sensor 104 together with inverter 106 generates a logical high signal TRIP 2 when the duty cycle blanking count equals a second predetermined number. This signal TRIP 2 is applied to AND gates 112 and 114. The UP signal, generated in the manner described in relation to Figure 8 is applied to a second input of both AND gates 110 and 114. Similarly, the DOWN signal is applied to a second input of both AND gates 108 and 112. The outputs of AND gates 108 and 110 are applied to latch circuit 116.

The outputs of AND gates 112 and 114 are applied to latch circuit 118. In a manner similar to that described above in relation to Figure 8, the state of latch circuits 116 and 118 are changed when the duty cycle blanking count crosses one of the predetermined numbers sensed by count sensors 100 and 104. When latch circuit 116 is in a first state a L signal is produced. When latch circuit 118 is in a first state a H signal is produced. When neither a L signal nor a H signal is produced gate circuit 120 generates a M signal. These signals may then be applied to NAND gate circuits such as NAND gates 92 and 94 illustrated in Figure 8 for gating with an inverted SAMPLE signal and thence to level shifters such as level shifters 96 and 98 illustrated in Figure 8. Thus the circuit in Figure 9 may be used to generate the signals necessary to energize one of the transistors 70, 72 or 74 illustrated in Figure 1.

Although the present invention has been described herein in the context of particular embodiments, various changes or modifications may be made in the construction or arrangement of the parts or elements of the disclosed embodiments without departing from the spirit and scope of the invention as set forth in the appended claims.

WHAT IS CLAIMED IS:

1.  A liquid crystal display system comprising:

    a liquid crystal display segment;

    display drive means for alternately coupling the segment to
    first and second voltages; and

    temperature compensation means for determining the ratio of
    the capacitance of the segment when coupled to the first
    voltage to the capacitance of the segment when coupled
    to the second voltage, and for changing the second
    voltage to converge said ratio toward a predetermined
    ratio value.

2.  The display system of Claim 1 wherein the first and second
voltages have predetermined RMS values.

3.  The display system of Claim 2 wherein the second voltage is
changed by varying the duty cycle blanking thereof.

4.  The display system of Claim 1 or 2 wherein the first voltage
has a predetermined value below a predetermined threshold voltage
of said segment.

5.  The display system of Claim 4 wherein the second voltage has
a selected value above said threshold voltage of said segment.

6.  A display drive circuit for use in a liquid crystal display
system having a liquid crystal display segment, the drive circuit
comprising:

    display drive means for alternately coupling the segment to
    first and second voltages; and

    temperature compensation means for determining the ratio of
    the capacitance of the segment when coupled to the first
    voltage to the capacitance of the segment when coupled
    to the second voltage, and for changing the second
    voltage to converge said ratio toward a predetermined ratio value.

7. The display drive circuit of Claim 6 wherein the first and second voltages have predetermined RMS values.

8. The display drive circuit of Claim 7 wherein the second voltage is changed by varying the duty cycle blanking thereof.

9. The display drive circuit of Claim 6 or 7 wherein the first voltage has a predetermined value below a predetermined threshold voltage of said segment.

10. The display drive circuit of Claim 9 wherein the second voltage has a selected value above said threshold voltage of said segment.

11. A liquid crystal display system comprising:

first and second liquid crystal display segments;

display drive means for coupling the first segment to a predetermined first voltage, and the second segment to a second voltage; and

temperature compensation means for determining the ratio of the capacitance of the first segment when coupled to the first voltage to the capacitance of the second segment when coupled to the second voltage, and for changing the second voltage to converge said ratio toward a predetermined ratio value.

12. The display system of Claim 11 wherein the first and second voltages have predetermined RMS values.

13. The display system of Claim 12 wherein the second voltage is changed by varying the duty cycle blanking thereof.

14. The display system of Claim 11 or 12 wherein the first voltage has a predetermined value below a predetermined threshold voltage of said segment.

15. The display system of Claim 14 wherein the second voltage has

0044152

has a selected value above said threshold voltage of said segment.

16. A display drive circuit for use in a liquid crystal display system having first and second liquid crystal display segments, the drive circuit comprising:

display drive means for coupling the first segment to a first voltage, and the second segment to a second voltage; and

temperature compensation means for determining the ratio of the capacitance of the first segment when coupled to the first voltage to the capacitance of the second segment when coupled to the second voltage, and for changing the second voltage to converge said ratio toward a predetermined ratio value.

17. The display drive circuit of Claim 16 wherein the first and second voltages have predetermined RMS values.

18. The display drive circuit of Claim 17 wherein the second voltage is changed by varying the duty cycle blanking thereof.

19. The display drive circuit of Claim 16 or 17 wherein the first voltage has a predetermined value below a predetermined threshold voltage of said segment.

20. The display drive circuit of Claim 19 wherein the second voltage has a selected value above said threshold voltage of said segment.

21.      A liquid crystal display system comprising:

a liquid crystal display segment;

a display drive means for alternatively coupling said display segment to first and second voltages;

a capacitance ratio selection means, responsive to the temperature of said display segment, for selecting one of a plurality of predetermined ratio values, each predetermined ratio value corresponding to one of a plurality of temprature ranges; and

a temperature compensation means for determining the ratio of the capacitance of said display segment when coupled to said first voltage to the capacitance of said display segment when coupled to said second voltage, and for changing said second voltage to converge said ratio to said selected predetermined ratio value.

22.      The liquid crystal display system claimed in Claim 21, wherein said temperature compensation means comprises:

a first charging means for charging said display segment to a predetermined voltage at a predetermined first rate after said display drive means has coupled said display segment to said first voltage;

a second charging means for charging said display segment to a predetermined voltage at a selected one of a a plurality of predetermined second rates corresponding to said selected predetermined ratio value after said display drive means has coupled said display segment to said second voltage;

a timer means for measuring the first charging time of said first charging means and the second charging time of said second charging means; and

a converging means for increasing said second voltage when said first charging time exceeds said second charging time and for decreasing said second voltage when said second charging time exceeds said first charging time.

23. The liquid crystal display system claimed in Claim 22, wherein:

said display drive means includes a second voltage generator comprising a predetermined voltage source, a counter having a duty cycle blanking count stored therein and a duty cycle blanking means for generating said second voltage by blanking the voltage generated by said predetermined voltage source by a duty cycle ratio corresponding to said duty cycle blanking count;

said capacitance ratio selection means being responsive to said duty cycle blanking count for selecting said predetermined ratio value depending upon said duty cycle blanking count; and

said converging means comprises means for decrementing said duty cycle blanking count when said first charging time exceeds said second charging time and means for incrementing said duty cycle blanking count when said second charging time exceeds said first charging time.

24. The liquid crystal display system as claimed in Claim 23, wherein said capacitance ratio selection means comprises:

a state counter having a plurality of states, each state corresponding to one of said plurality of predetermined ratio values;

a plurality of count sensors, each responsive to said duty cycle blanking count for generating a coincidence signal when said duty cycle blanking count equals a respective predetermined count, and each associated with two states of said state counter corresponding to adjacent temperature ranges; and

a state selector means, responsive to said count sensors and said timer means, for placing said state counter in said state associated with a count sensor generating an enable signal corresponding to the lower temperature range when said first charging time exceeds said second charging time and for placing said state counter in said state associated with a count sensor generating an enable signal corresponding to the higher temperature range when said second charging time exceeds said first charging time.

25. The liquid crystal display system claimed in Claim 21, further comprising:

a plurality of liquid crystal display segments;

0044152

an off voltage generator means for generating an off voltage having a first predetermined ratio to said second voltage;

an on voltage generator means for generating an on voltage having a second predetermined ratio to said second voltage, said second predetermined ratio being greater than said first predetermined ratio; and

a display actuation means for coupling said on voltage to selected ones of said plurality of display segments for actuation thereof and for coupling said off voltage to the other of said plurality of display segments.

26.     A display drive circuit for use in a liquid crystal display system having a liquid crystal display segment, said drive circuit comprising:

a display drive means for alternately coupling said display segment to first and second voltages;

a capacitance ratio selection means, responsive to the temperature of said display segment, for selecting one of a plurality of predetermined ratio values corresponding to one of a plurality of temperature ranges ; and.

a temperature compensation means for determining the ratio of the capacitance of said display segment when coupled to said first voltage to the capacitance ratio of said display segment when coupled to said second voltage, and for changing said second voltage to converge said ratio to said selected predetermined ratio value.

27.    The liquid crystal display system claimed in Claim 26, wherein said temperature compensation means comprises:

a first charging means for charging said display segment to a predetermined voltage at a predetermined first rate after said display drive means has coupled said display segment to said first voltage;

a second charging means for charging said display segment to a predetermined voltage at a selected one of a plurality of predetermined second rates corresponding to said selected predetermined ratio value after said display drive means has coupled said display segment to said second voltage;

a timer means for measuring the first charging time of said first charging means and the second charging time of said second charging means; and

a converging means for increasing said second voltage when said first charging time exceeds said second charging time and for decreasing said second voltage when said second charging time exceeds said first charging time.

28.    The liquid crystal display system claimed in Claim 27, wherein:

said display drive means includes a second voltage generator comprising a predetermined voltage source, a counter having a duty cycle blanking count stored therein and a duty cycle blanking means for generating said second voltage by blanking the voltage generated by said predetermined voltage source by a duty cycle ratio corresponding to said duty cycle blanking count;

said capacitance ratio selection means being responsive to said duty cycle blanking count for selecting said predetermined ratio value depending upon said duty cycle blanking count; and

said converging means comprises means for decrementing said duty cycle blanking count when said first charging time exceeds said second charging time and means for incrementing said duty cycle blanking count when said second charging time exceeds said first charging time.

29.     The liquid crystal display system as claimed in Claim 28, wherein said capacitance ratio selection means comprises:

a state counter having a plurality of states, each state corresponding to one of said plurality of predetermined ratio values;

a plurality of count sensors, each responsive to said duty cycle blanking count for generating a coincidence signal when said duty cycle blanking count equals a respective predetermined count, and each associated with two states of said state counter corresponding to adjacent temperature ranges; and

a state selector means, responsive to said count sensors and said timer means, for placing said state counter in said state associated with a count sensor generating an enable signal corresponding to the lower temperature range when said first charging time exceeds said second charging time and for placing said state counter in said state associated with a count sensor generating an enable signal corresponding to the higher temperature range when said second charging time exceeds said first charging time.

30.     The liquid crystal display system claimed in Claim 26, further comprising:

a plurality of liquid crystal display segments;

an off voltage generator means for generating an off voltage having a first predetermined ratio to said second voltage;

an on voltage generator means for generating an on voltage having a second predetermined ratio to said second voltage, said second predetermined ratio being greater than said first predetermined ratio; and

a display actuation means for coupling said on voltage to selected ones of said plurality of display segments for actuation thereof and for coupling said off voltage to the other of said plurality of display segments.

31.     A liquid crystal display system comprising:

a first and second liquid crystal display segments;

a display drive means for coupling said first display segment to a first voltage and for coupling said second display segment to a second voltage;

a capacitance ratio selection means, responsive to the temperature of said display segments, for selecting one of a plurality of predetermined ratio values, each ratio value corresponding to one of a plurality of temperature ranges; and

a temperature compensation means for determining the ratio of the capacitance of said first display segment when coupled to said first voltage to the capacitance of said second display segment when coupled to said second voltage and for changing said second voltage and for changing said second voltage to converge said ratio to said selected predetermined ratio value.

32.     The liquid crystal display system claimed in Claim 31, wherein said temperature compensator means comprises:

a first charging means for charging said first display segment to a predetermined voltage at a predetermined first rate after said display drive means has coupled said first display segment to said first volrage;

a second charging means for charging said second display segment to a predetermined voltage at a selected one of a plurality of predetermined second rates corresponding to said selected predetermined ratio value after said display drive means has coupled said second display segment to said second voltage;

44

a charging time comparison means for determining the relationship of the first charging time of the second charging means to the charging time of the second charging means; and

a converging means for increasing said second voltage when said first charging time exceeds said second charging time and for decreasing said second voltage when said second charging time exceeds said first charging time.

33.      The liquid crystal display system claimed in Claim 32, wherein:

said display drive means includes  a second voltage generator comprising a predetermined voltage source, a counter having a duty cycle blanking count stored therein and a duty cycle blanking means for generating said second voltage by blanking the voltage generated by said predetermined voltage source by a duty cycle ratio corresponding to said duty cycle blanking count;

said capacitance ratio selection means being responsive to said duty cycle blanking count for selecting said predetermined ratio value depending upon said duty cycle blanking count; and

said converging means comprises means for decrementing said duty cycle blanking count when said first charging time exceeds said second charging time and means for incrementing said duty cycle blanking count when said second charging time exceeds said first charging time.

34.      The liquid crystal display system as claimed in Claim

45

**0044152**

33. wherein said capacitance ratio selection means comprises:

a state counter having a plurality of states, each state corresponding to one of said plurality of predetermined ratio values:

a plurality of count sensors, each responsive to said duty cycle blanking count for generating a coincidence signal when said duty cycle blanking count equals a respective predetermined count, and each associated with two states of said state counter corresponding to adjacent temperature ranges: and

a state selector means, responsive to said count sensors and said timer means, for placing said state counter in said state associated with a count sensor generating an enable signal corresponding to the lower temperature range when said first charging time exceeds said second charging time for placing said state counter in said state associated with a count sensor generating an enable signal corresponding to the higher temperature range when said second charging time exceeds said first charging time.

35. The liquid crystal display system claimed in Claim 31, further comprising:

a plurality of liquid crystal display segments;

an off voltage generator means for generating an off voltage having a first predetermined ratio to said second voltage;

an on voltage generator means for generating an on voltage having a second predetermined ratio to said second voltage, said second predetermined ratio being greater than said first predetermined ratio; and

a display actuation means for coupling said on voltage to selected ones of said plurality of display segments for actuation thereof and for coupling said off voltage to the other of said plurality of display segments.

36.     A display drive circuit for use in a liquid crystal display system having first and second display segments, said display drive circuit comprising:

a display drive means for coupling said first display segment to a first voltage and for coupling said second display segment to a second voltage;

a capacitance ratio selection means, responsive to the temperature of said display segments, for selecting one of a plurality of predetermined ratio values, each ratio value corresponding to one of a plurality of temperature ranges; and

a temperature compensation means for determining the ratio of the capacitance of said first display segment when coupled to said first voltage to the capacitance of said second display segment when coupled to said second voltage and for changing said second voltage and for changing said second voltage to converge said ratio to said selected predetermined ratio value.

37. The liquid crystal display system claimed in Claim 36, wherein said temperature compensator means comprises:

a first charging means for charging said first display segment to a predetermined voltage at a predetermined first rate after said display drive means has coupled said first display segment to said first voltage;

a second charging means for charging said second display segment to a predetermined voltage at a selected one of a plurality of predetermined second rates corresponding to said selected predetermined ratio value after said display drive means has coupled said second display segment to said second voltage;

a charging time comparison means for determining the relationship of the first charging time of the second charging means to the charging time of the second charging means; and

a converging means for increasing said second voltage when said first charging time exceeds said second charging time and for decreasing said second voltage when said second charging time exceeds said first charging time.

38. The liquid crystal display system claimed in Claim 37, wherein:

said display drive means includes a second voltage generator comprising a predetermined voltage source, a counter having a duty cycle blanking count ~~stored therein~~ and a duty cycle blanking means for generating said second voltage by blanking the voltage generated by said predetermined voltage source by a duty cycle ratio corresponding to said duty cycle blanking count;

said capacitance ratio selection means being responsive to said duty cycle blanking count for selecting said predetermined ratio value depending upon said duty cycle blanking count; and

said converging means comprises means for decrementing said duty cycle blanking count when said first charging time exceeds said second charging time and means for incrementing said duty cycle blanking count when said second charging time exceeds said first charging time.

39.    The liquid crystal display system as claimed in Claim 38, wherein said capacitance ratio selection means comprises:

a state counter having a plurality of states, each state corresponding to one of said plurality of predetermined ratio values;

a plurality of count sensors, each responsive to said duty cycle blanking count for generating a coincidence signal when said duty cycle blanking count equals a respective predetermined count, and each associated with two states of said state counter corresponding to adjacent temperature ranges; and

a state selector means, responsive to said count sensors and said charging time comparison means, for placing said state counter in said state associated with a count sensor generating an enable signal corresponding to the lower temperature range when said first charging time exceeds said second charging time and for placing said state counter in said state associated with a count sensor generating an enable signal corresponding to the higher temperature range when said second charging time exceeds said first charging time.

40.       The liquid crystal display system claimed in Claim 39, further comprising:

a plurality of liquid crystal display segments;

an off voltage generator means for generating an off voltage having a first predetermined ratio top said second voltage;

an on voltage generator means for generating an on voltage having a second predetermined ration to said second voltage, said second predetermined ration being greater than said first predetermined ratio; and

a display actuation means for coupling said on voltage to selected ones of said plurality of display segments for actuation thereof and for coupling said off segment voltage to the other os said plurality of display segments.

50

41.     A data processing system comprising:

data processing means for providing data in an encoded format in a first operating mode and in a display format in a second operating mode; and

data display means responsive to the operating mode of the

data processing means, for receiving the data provided by the data processing means, converting data received in the encoded format to the display format, and displaying the received data in the display format.

42.     The data processing system of Claim 41 wherein the data display means are for receiving the data provided by the data processing means, storing the received data, converting data received and stored in the encoded format into the display format, storing the converted data in the display format, and displaying the received and stored data in the display format.

43.     The data processing system of Claim 41 wherein the data display means comprises:

first storage means for selectively receiving and storing data in the encoded format, and for selectively providing data stored therein in the encoded format;

second storage means for selectively receiving and storing data in the display format, and for selectively providing data stored therein in the display format;

conversion means for selectively receiving data in the

51

encoded format, converting the received data to
the

display format, and providing the data in the display format;

control means responsive to the operating mode of the
data processing means, for selectively enabling the first storage means, the conversion means and the second storage means to receive and store the data provided by the data processing means, convert data received and stored in the encoded format to the display format, store the converted data in the display format, and provide the data in the display format; and

display means for displaying the data provided by the
second storage means in the display format.

Fig. 1

Fig. 2

Fig. 3

Fig. 4

Fig. 5

3 / 6

0044152

DRIVE
VOLTAGE

RMS
VOLTS

$V_{ON}$

$V_{SAT}$

$V_{OFF}$

$V_{TH}$

0°C          TEMPERATURE          40°C

*Fig.6*

DRIVE
VOLTAGE

RMS
VOLTS

$V_{ON}$

$V_{SAT}$

$V_{OFF}$

$V_{TH}$

0°C          TEMPERATURE          40°C

*Fig.7*

Fig. 8

Fig. 9